# EUROPÄISCHE PATENTSCHRIFT

(11) **EP 0 933 017 B1**
(45) Veröffentlichungstag und Bekanntmachung des Hinweises auf die Patenterteilung: **23.10.2002**
(21) Anmeldenummer: 99100745.1
(22) Anmeldetag: 16.01.1999
(51) Int. Cl.: A01F 12/30, A01D 61/00

(54) **Rotationsförderer mit einem Rotationskörper und wenigstens einem Mitnehmer und Erntemaschine mit einem solchen Rotationsförderer**
Transporting device with rotating and at least driving element and harvester with such a transporting device
Transporteur rotatif avec corps de rotation et au moins un entraîneur et récolteuse pourvue d'un tel transporteur rotatif

(30) Priorität: 29.01.1998 DE 19803336
(43) Veröffentlichungstag der Anmeldung: 04.08.1999
(60) Teilanmeldung: 02100451.0
(73) Patentinhaber: DEERE & COMPANY, Moline, Illinois 61265-8098 (US)
(72) Erfinder: Bischoff, Lutz, 66503 Dellfeld (DE); Lauer, Fritz, 66894 Krähenberg (DE)
(74) Vertreter: Magin, Ludwig Bernhard

(56) Entgegenhaltungen:
- EP-A- 0 567 192
- FR-A- 2 315 213
- FR-A- 2 342 022
- GB-A- 612 962
- GB-A- 797 686
- US-A- 2 557 226
- US-A- 2 803 505
- US-A- 2 849 103
- US-A- 2 851 144

## Beschreibung

Die Erfindung betrifft einen Rotationsförderer mit einem Rotationskörper und wenigstens einem Mitnehmer, wobei der Rotationskörper eine im wesentlichen geschlossene Umwandung aufweist und der Mitnehmer im Innern des Rotationskörpers gegenüber der Rotationsachse exzentrisch und drehbar gelagert ist und sich radial beweglich durch eine Mitnehmerführung erstreckt, die gegenüber dem Außenumkreis der Mantelfläche des Rotationskörpers radial nach innen versetzt ist, sowie eine Erntemaschine mit einem solchen Rotationsförderer.

Es sind mehrere Möglichkeiten bekannt, um Erntegut aufzulockern und zu verteilen. Eine Möglichkeit besteht z. B. darin, mit einem Rotationsförderer, der mit starren Fingern versehen ist, das Fördergut zu erfassen und zu verteilen, beispielsweise oberhalb der Schüttler eines Mähdreschers. Bekannte Mähdrescher verfügen über unterschlächtig fördernde Zinkenförderer oder oberschlächtig fördernde Zahnleistenför-derer. In der DE-A-41 27 118 wird eine schnell umlaufende Gutbearbeitungsvorrichtung in der Form eines mit Zinken versehenen Förderbandes vorgeschlagen, die zusätzlich zu einem nachgeschalteten Querschüttler den Erntegutteppich aufreißen soll.

Der Querschüttler läßt sich auch durch einen Rotationsförderer mit beweglichen und exzentrisch gelagerten Mitnehmern ersetzen, wie aus der DE-C-1 904 406 bekannt ist. In allen Fällen wird das Stroh für eine gründliche Abscheidung der restlichen Körner länger und intensiver aufgelockert. Durch das Aufreißen des Erntegutteppichs können schwerere Erntegutteile durch die geschaffenen Lücken entweichen.

In der GB-A-612 962 ist ein in einem Schrägförderer eines Mähdreschers angeordneter Rotationsförderer beschrieben, der aus einem drehbaren, kreiszylindrischen Rotationskörper mit darin exzentrisch angeordneten Mitnehmern aufgebaut ist. Die Finger erstrecken sich durch Mitnehmerführungen, die an der Innenseite des Rotationskörpers angeordnet sind und durchdringen Schlitze im Rotationskörper.

Das der Erfindung zugrunde liegende Problem wird darin gesehen, daß die bekannten Rotationsförderer zahlreiche Vorsprünge aufweisen, beispielsweise starre, eventuell gekrümmte Mitnehmer oder vorstehende Schrauben und Mitnehmerführungen, die das Erntegut, beispielsweise Getreidehalme in einem Mähdrescher, sehr weit mitnehmen und sich dieses im ungünstigsten Fall um den Rotationsförderer wickelt. Dadurch wird die Förderkapazität eingeschränkt und das Material sehr grob behandelt. Bei dem Rotationsförderer gemäß GB-A-612 962 kann sich das Gut zwischen den Schlitzen und den Mitnehmerführungen verfangen. Dieses Problem wird erfindungsgemäß gelöst durch die Lehre des Anspruchs 1, wobei in den weiteren Patentansprüchen Merkmale genannt sind, die die Lösung in vorteilhafter Weise weiterentwickeln.

Der Rotationsförderer enthält einen Rotationskörper mit wenigstens einem exzentrisch gelagerten und zu diesem radial beweglichen Mitnehmer. Die weitere Beschreibung geht jedoch von mehreren Mitnehmern aus, weil dies der normale Fall ist. Der Rotationskörper weist in seiner Umwandung radial nach innen versetzte und parallel zur Längsmittenachse verlaufende Bereiche auf, in denen die Mitnehmerführungen angeordnet sind. Dadurch wird die Gefahr des Wickelns von Fördergut reduziert, da die Oberfläche des Rotationsförderers weniger Vorsprünge aufweist. Zwischen den radial nach innen versetzten Bereichen ist die Mantelfläche des Rotationskörpers in geeigneter Weise, z. B. kreisförmig, gekrümmt und glatt.

In der radial innenliegenden Stellung der Mitnehmer kommt das freie Ende der Mitnehmer unter der äußeren Oberfläche des radial nicht versetzten Bereichs des Rotationskörpers zu liegen. D. h. die Mitnehmer werden hinter die Mantelfläche des Rotationskörpers eingezogen, so daß an der Seite des Rotationsförderers, an der das Fördergut abgegeben wird, dieses nicht so weit mitgenommen wird. Dadurch wird das Material sehr schonend behandelt. Durch die Schaffung radial nach innen versetzter Bereiche erübrigt sich eine radial einwärts gerichtete Verlängerung der Mitnehmerführungen, was zu einer deutlichen Materialersparnis führt, wenn, beispielsweise nach starkem Abrieb oder Beschädigung durch das Fördergut, die Mitnehmerführungen erneuert werden müssen.

Der Mantel des Rotationskörpers ist aus mindestens einer Metallabdeckung geformt, die so gebogen ist, daß sich die radial nach innen versetzte Bereiche ergeben. Die parallel zur Längsmittenachse verlaufenden Kanten der Metallabdeckung sind auf der in Drehrichtung des Trommelförderers gelegenen Schattenseite der nach innen versetzten Bereiche untergebracht. Dadurch reduziert sich für das Fördergut die Gefahr, sich zu verfangen. Ist die Oberfläche des Rotationskörpers mit mehreren Metallabdeckungen versehen, ist es im Falle von Wartungen oder Reparaturen ausreichend, nur die Metallabdeckungen zu lösen, die dem Wartungsvorgang im Wege stehen, so daß sich der Arbeitsaufwand beträchtlich verringert.

Die Mitnehmer sind auf Stummelwellen drehbar gelagert. Eine der Stummelwellen ist im Antriebsflansch des Rotationskörpers gelagert. Durch die Verschraubung des Antriebsflanschs mit einer der Stirnwände des Rotationskörpers ist die Stummelwelle damit automatisch zentriert.

Die Mitnehmer sind in Abständen in der Richtung der Rotationsachse des Rotationsförderers angeordnet, insbesondere derart, daß, beginnend mit dem ersten Mitnehmer jeweils drei Mitnehmer eine Gruppe bilden und aufeinanderfolgende Mitnehmer um je 120° zueinander versetzt sind. Der Abstand aufeinanderfolgender Mitnehmer kann entsprechend der Art des Einsatzes variieren und sich beispielsweise beim Einsatz oberhalb der Schüttler eines Mähdreschers nach der Schüttlerbreite richten.

Besonders vorteilhaft läßt sich ein solcher Rotationsförderer in Erntemaschinen, insbesondere einem Mähdrescher mit Schüttlern, verwenden.

Der Rotationsförderer wird so über den Schüttlern installiert, daß sich über jedem Strohschüttler eine Gruppe von beispielsweise drei Mitnehmern befindet.

Die Mitnehmer sind auf einer Achse exzentrisch und drehbar gelagert, die selber auf Stummelwellen des Rotationskörpers gelagert ist. Dadurch werden die Mitnehmer bei einer Drehung des Rotationskörpers um dessen Längsmittenachse abwechselnd eingefahren und ausgefahren und können so das Fördergut aufnehmen und abgeben, beispielsweise unterschlächtig fördernd oberhalb der Schüttler eines Mähdreschers.

Um die Gefahr, daß sich Fördergut um den Rotationsförderer legt, weiter zu verringern, kann ein Abweiserblech an den Rotationskörper gestellt werden. Durch die Versenkung der Mitnehmer wird es möglich, einen sehr kleinen Abstand zwischen Abweiserblech und der Oberfläche des Rotationskörpers einzustellen, so daß Fördergut effizient abgewiesen wird. Das Abweiserblech kann sich über die ganze Längsseite des Rotationskörpers erstrecken oder aus Streifen bestehen, die nur zwischen den Mitnehmern das Fördergut von der Oberfläche des Rotationskörpers fernhalten. Wenn das Abweiserblech sehr eng an die Trommel gestellt wird, kann es auch Halme abreißen, die an der Trommel hängenbleiben. Dieser Vorteil kommt um so stärker zur Geltung, je kleiner der Spalt zwischen Abweiserblech und Rotationskörper ist.

Wird das Abweiserblech schwenkbar gelagert, z. B. im Rahmen eines Erntefahrzeugs, kann es durch eventuell doch wickelndes Material nach hinten weggeklappt werden und einen Schalter betätigen, der ein Warnsignal auslöst.

Der Rotationsförderer läßt sich derart anordnen, daß er sowohl zum oberschlächtigen als auch zum unterschlächtigen Transport von Erntematerial geeignet ist. Bei oberschlächtigem Transport, beispielsweise oberhalb des Mähbalkens eines Mähdreschers, kommen die Vorzüge, die sich aus der Versenkung von Vorsprüngen, wie z. B. der Mitnehmerführungen, ergeben, gleichermaßen zur Geltung wie beim unterschlächtigen Transport.

In der Zeichnung ist ein nachfolgend näher beschriebenes Ausführungsbeispiel der Erfindung dargestellt. Es zeigt:
- Fig. 1: eine Erntemaschine mit einem erfindungsgemäßen Rotationsförderer zum Verteilen von Erntegut,
- Fig. 2: einen Längsschnitt durch die Mitte des Rotationsförderers mit darin exzentrisch gelagerten Mitnehmern und
- Fig. 3: einen Querschnitt durch den Rotationsförderer entlang einer Linie 3-3 und in Blickrichtung der dazugehörigen Pfeile in Figur 2.

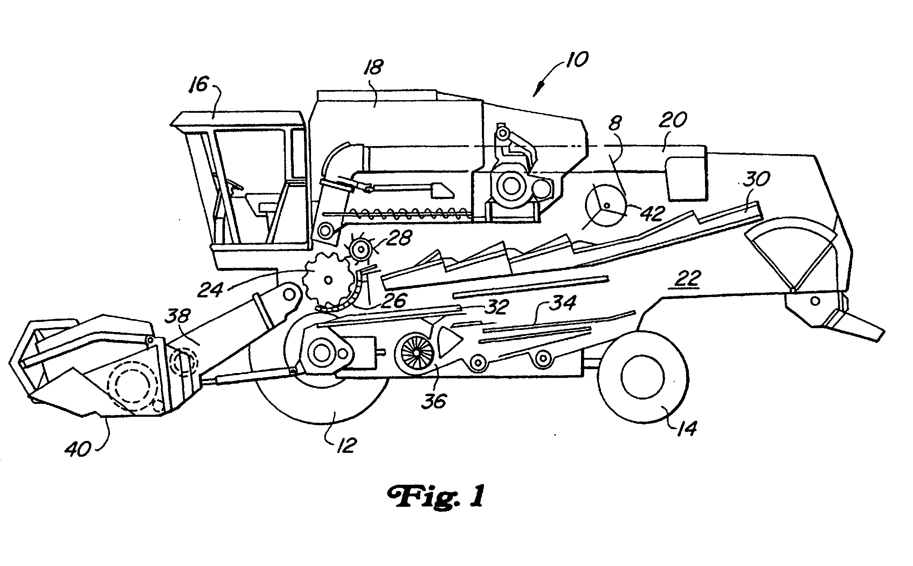

Figur 1 zeigt eine Erntemaschine 10 in der Form eines Mähdreschers mit vorderen angetriebenen und rückwärtigen lenkbaren Rädern 12 bzw. 14 und einer Fahrerkabine 16, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34, wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 der Dreschtrommel 24 zugeführt, nachdem es von einer Erntegutbergungsvorrichtung 40 vom Boden aufgenommen worden ist.

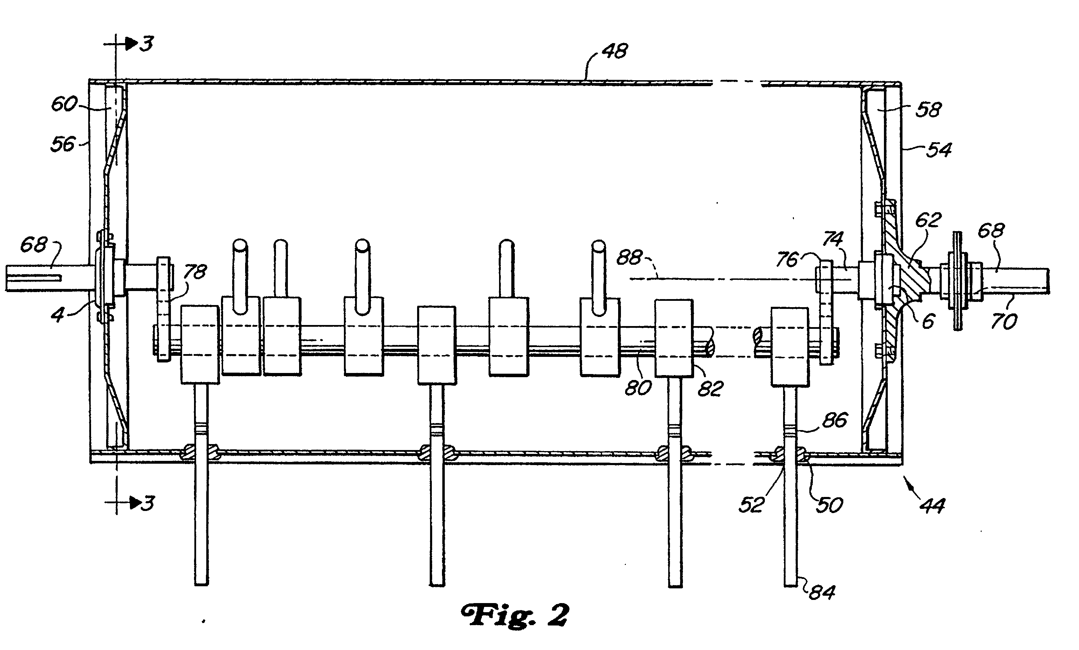

Oberhalb der Schüttler 30 ist um eine quer zur Fahrtrichtung angeordnete Drehachse ein als Zusatzabscheider dienender Rotationsförderer 42 mit einem Rotationskörper 44 und Mitnehmern 84, wie in Figur 2 gezeigt, vorgesehen, der aus Metall oder Kunststoff besteht. An den Rotationskörper 44 ist ein Abweiserblech 8 gestellt, das schwenkbar gelagert sein kann.

Die Drehung des Rotationsförderers 42 erfolgt mit Blick auf Figur 1 entgegen dem Uhrzeigerdrehsinn, d. h. unterschlächtig fördernd. Hierzu sind ebenfalls nicht gezeigte Antriebsmittel z. B. eine mit einer Stirnwand des Rotationskörpers 44 drehfest verbundene Riemenscheibe vorgesehen, die einen von einem Motor kommenden Antrieb einleitet.

Die Stellung des Rotationsförderers 42 befindet sich vorzugsweise - aber nicht ausschließlich - oberhalb der Schüttler 30 im Bereich deren halber Länge. Diese Stellung kann mittels einer entsprechenden Führung vertikal wie auch horizontal geändert werden.

Alternativ könnte der Rotationsförderer 42 auch unmittelbar stromabwärts der Wendetrommel 28 vorgesehen werden.

Die Antriebsmittel können auf vielfältige Weise ausgestaltet sein und z. B. ein geschwindigkeitsvariables und/oder drehrichtungsumkehrbares Getriebe enthalten, mit dem die Drehzahl des Rotationsförderers 42 geändert und dessen Drehrichtung umgekehrt werden kann.

Auf diese Weise kann der Rotationsförderer 42 sowohl ober- als auch unterschlächtig fördernd angetrieben werden, wobei gegebenenfalls die Stellung der Mitnehmer 84 entsprechend angepaßt werden muß.

Die bisherige Beschreibung zeigt, daß der Aufbau des Rotationsförderers 42 im wesentlichen dem Aufbau des Mittenbereichs einer Förderschnecke eines Schneidwerks oder einer Pick-Up entspricht, die hinlänglich bekannt sind.

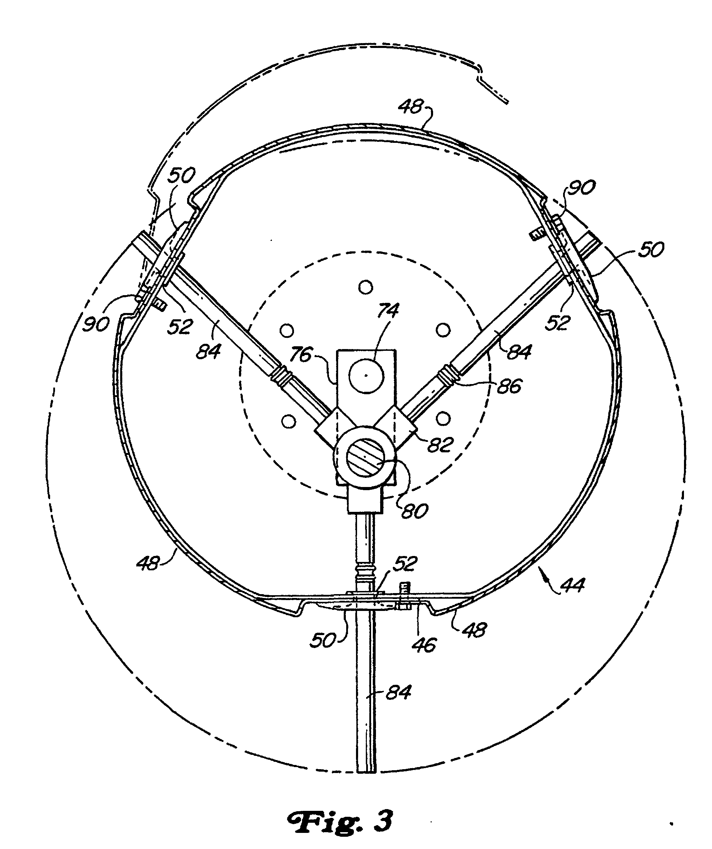

Gemäß Figur 3 enthält der Rotationsförderer 42 einen Rotationskörper 44, dessen Mantelfläche sich im vorliegenden Fall aus drei Metallabdeckungen 48 zusammensetzt. Die Metallabdeckungen 48 sind derart gebogen, daß sich radial nach innen versetzte, parallel zur Rotationsachse des trommelförmigen Rotationsförderers 42 verlaufende Bereiche 46 ergeben, in denen sich in dem gezeigten Ausführungsbeispiel achtzehn radial nach innen erstreckende aus Kunststoff oder Metall bestehende Mitnehmerführungen 50 und Öffnungen 52 befinden. Die parallel zur Rotationsachse verlaufenden Endkanten der Metallabdeckungen 48 verschwinden in den radial nach innen versetzten Bereichen 46.

Stirnwände 54 und 56 des Rotationskörpers 44 werden von Scheiben 58 und 60 gebildet, von denen eine mit einem Lagerflansch 62 versehen ist, der an sechs hexagonal angeordneten Stellen mittels Schrauben 64 an der Scheibe 58 befestigt ist. Die Scheiben 58 und 60 sind mit der Innenseite von zwei Metallabdeckungen 48 des Rotationskörpers 44 punktförmig verschweißt und besitzen auf der in das Innere des Rotationskörpers 44 weisenden Seite topfförmige Einbuchtungen. Getragen wird der Rotationskörper 44 von Stummelwellen 66 und 68. Die mit dem Lagerflansch 62 verbundene Stummelwelle 66 ist mit einer Keilnut 70 für ein Zahnrad versehen.

Im Rotationskörper 44 befindet sich eine exzentrisch und parallel zur Rotationsachse des Rotationskörpers 44 angeordnete Lagervorrichtung, die zwei ortsfeste Stummelwellen 68 und 74, zwei Tragarme 76 und 78 und eine Achse 80 enthält. Auf der Achse 80 sind um diese schwenkbare zweiteilig ausgebildete Klammern 82 in Abständen befestigt.

Die Mitnehmer 84 sind als geradförmige massive und gleich lange Stäbe mit im gezeigten Beispiel kreisrundem Querschnitt und Sollbruchstellen 86 ausgebildet, können aber z. B. auch der Drehrichtung nachlaufend geformt sein und müssen prinzipiell nicht massiv sein. Die Füße der Mitnehmer 84 sind so ausgebildet, daß sie in entsprechende Aussparungen der Klammern 82 passen und dort gehalten werden.

Die Mitnehmer 84 sind entlang der Achse 80 so angeordnet, daß sie um einen festen Winkel, z. B. 120°, zueinander versetzt sind und sich durch die Mitnehmerführungen 50 erstrecken. Die Mitnehmer 84 stehen über die Öffnungen 52 und Mitnehmerführungen 50 im Rotationskörper 44 unterschiedlich weit über diesen nach außen über.

Die Achse 80 ist vermittels der Tragarme 76 und 78 mit den Stummelwellen 74 und 68 starr verbunden. Die Stummelwelle 74 ist drehbeweglich im Lagerflansch 62 gelagert und die Stummelwelle 68 wird außerhalb des Rotationskörpers 44 festgesetzt. Vermöge zweier Rollenlager 4 und 6 wird erreicht, daß bei einer Drehung des Rotationskörpers 44 in einer Ebene senkrecht zur Längsmittenachse 88 die Scheiben 58 und 60 um die ortsfesten Stummelwellen 68 und 74 rotieren. Die Achse 80 behält ihre Position bei und die Mitnehmer 84 werden während eines Umlaufs des Rotationskörpers 44 über die Mitnehmerführungen 50, die sich lateral mittig in den radial nach innen versetzten Bereichen 46 befinden, ein- und ausgefahren. Befindet sich ein Mitnehmer 84 in der radial nach innen versetzten Position, dann befindet sich sein freies Ende unter der äußeren Manteloberfläche des radial nicht versetzten Bereichs des Rotationskörpers 44. Die von den freien Enden der Mitnehmer 84 beschriebene Bahn ist in Figur 3 gestrichelt eingezeichnet.

Die Mitnehmerführungen 50 sind in den nach innen versetzten Bereichen 46 des Rotationskörpers 44 angeordnet und an zwei Stellen in Querrichtung zur Längsmittenachse 88 gesehen beidseitig der Öffnungen 52 mit den Metallabdeckungen 48 verschraubt oder vernietet. Die Metallabdeckungen 48 sind neben jeder Mitnehmerführung 50 über Schrauben 90 miteinander verbunden. Zwei der drei Metallabdeckungen 48 sind mit den Scheiben 58 und 60 fest verschweißt. Die dritte Metallabdeckung 48 kann durch Lösen der Schrauben 90 vollständig abgenommen werden. Die Schrauben 90 sind auf der in Drehrichtung des Rotationskörpers 44 liegenden Schattenseite der radial nach innen versetzten Bereiche 46 untergebracht.

Die Verwendung mehrerer Metallabdeckungen 48 gemäß Figur 2 und 3 hat neben der Schaffung von radial nach innen versetzten Bereichen für die Fingerführungen 50 und Verschraubungen den Vorteil, daß sie die Zugänglichkeit und Montage erheblich vereinfacht. Um beispielsweise den Zugang zu den Klammern 82 zu ermöglichen, genügt es, die Verschraubungen der nicht mit den Scheiben 58 und 60 verschweißten Metallabdeckung 48 in der Versenkung, in der sich die Fingerführung 50 befindet, zu entfernen. Die Metallabdeckung 48 steht dann, wie in der Figur 3 anhand zweier Einstellungen gezeigt, von der Mantelfläche ab.

Entsprechend Figur 1 läßt sich an den Rotationskörper 44 ein Abweiserblech 8 stellen, das so orientiert ist, daß bei einer Drehung des Rotationskörpers 44 Fördergut, das sich um den Rotationskörper 44 gelegt hat, abgestreift wird.

Bei einem Einsatz des Rotationsförderers 42 in einem Mähdrescher können die Mitnehmer 84 so angeordnet werden, daß sie sich in Gruppen von drei Mitnehmern 84 über einem Schüttler 30 befinden, d. h. in einer 5-Schüttler-Maschine kommen fünfzehn und in einer 6-Schüttler-Maschine achtzehn Mitnehmer 84, wie in der Figur 2 gezeigt, zum Einsatz. Die drei sich jeweils vor den Stirnwänden 54 und 56 des Rotationskörpers 44 befindlichen Mitnehmer 84 besitzen in diesem Beispiel einen geringeren Abstand zueinander als die restlichen Mitnehmer 84.

## Patentansprüche

1. Rotationsförderer (42) mit einem Rotationskörper (44) und wenigstens einem Mitnehmer (84), wobei der Rotationskörper (44) eine im wesentlichen geschlossene Mantelfläche aufweist und der Mitnehmer (84) im Inneren des Rotationskörpers (44) gegenüber dessen Rotationsachse exzentrisch und drehbar gelagert ist und sich radial beweglich durch eine Mitnehmerführung (50) erstreckt, die gegenüber dem Außenumkreis der Mantelfläche des Rotationskörpers (44) radial nach innen versetzt ist, **dadurch gekennzeichnet, daß** die Mantelfläche des Rotationskörpers (44) einen radial nach innen versetzten Bereich (46) aufweist, an dem die Mitnehmerführung (50) angebracht ist.

2. Rotationsförderer (42) nach Anspruch 1, **dadurch gekennzeichnet, daß** in der radial innenliegenden Stellung des Mitnehmers (84) das freie Ende des Mitnehmers (84) unter der äußeren Manteloberfläche des radial nicht versetzten Bereichs des Rotationskörpers (44) zu liegen kommt.

3. Rotationsförderer (42) nach Ansprüchen 1 oder 2, **dadurch gekennzeichnet, daß** mindestens eine Metallabdeckung (48) den Mantel des Rotationskörpers (44) formt und so gebogen ist, daß sich in der Umwandung radial nach innen versetzte Bereiche (46) ergeben, in denen die Endkanten der Metallabdeckung (48) zu liegen kommen.

4. Rotationsförderer (42) nach einem oder mehreren der vorhergehenden Ansprüche, **dadurch gekennzeichnet, daß** eine die Mitnehmer (84) tragende Achse (80) auf Stummelwellen (68) und (74) gehalten ist und eine Stummelwelle (74) im Antriebsflansch (62) des Rotationskörpers (44) gelagert ist.

5. Rotationsförderer (42) nach einem oder mehreren der vorhergehenden Ansprüche, **dadurch gekennzeichnet, daß** die Mitnehmer (84) in Abständen entlang der Längsmittenachse (88) des Rotationsförderers (42) angeordnet sind, insbesondere derart, daß sich Mitnehmergruppen aus jeweils drei Mitnehmern (84) ergeben, in denen aufeinanderfolgende Mitnehmer (84) um je 120° zueinander versetzt sind.

6. Erntemaschine (10), insbesondere Mähdrescher mit Schüttlern (30), mit einem Rotationsförderer (42) gemäß einem oder mehreren der Ansprüche 1 bis 5.

7. Erntemaschine (10) nach Anspruch 6, **dadurch gekennzeichnet, daß** über jedem Schüttler (30) eine Gruppe von Mitnehmern (84) angeordnet ist

8. Erntemaschine (10) nach Anspruch 6 oder 7, **gekennzeichnet durch** mindestens ein Abweiserblech (8), das in geringem Abstand zu dem Rotationskörper (44) verläuft.

9. Erntemaschine (10) nach Anspruch 8, **dadurch gekennzeichnet, daß** das dem Rotationskörper zugelegte Abweiserblech (8) schwenkbar gelagert ist und bei seinem Abheben vom Rotationskörper (44) ein Alarmsignal ausgelöst wird.

10. Erntemaschine (10) nach Anspruch 6, **dadurch gekennzeichnet, daß** innerhalb einer Erntebergungsvorrichtung ein Rotationsförderer (42) zum ober- oder unterschlächtigen Transport von Erntematerial angebracht ist.

## Claims

1. Rotary conveyor (42) with a rotating body (44) and at least one gripper (84), wherein the rotating body (44) is provided with an essentially closed circumferential surface and the gripper (84) is eccentrically and rotatably supported in the interior of the rotating body (44) with respect to the rotational axis of the rotating body (44) and extends radially movable through a gripper guide (50) which is offset radially inward from the outer circumference of the circumferential surface of the rotating body (44), **characterized in that** the circumferential surface of the rotational body (44) comprises a radially inward offset region (46) in which the gripper guide (50) is mounted.

2. Rotary conveyor (42) according to claim 1, **characterized in that** in the radial innermost position of the gripper (84), the free end of the gripper (84) comes to lie under the outer circumferential surface of the region of the rotating body (44) which is not radially offset.

3. Rotary conveyor (42) according to claim 1 or 2, **characterized in that** at least a metal cover (48) forms the circumference of the rotational body (44) and is bent such that in the circumferential wall radially inward offset regions (46) are obtained in which the end edges of the metal cover (48) come to lie.

4. Rotary conveyor (42) according to one or more of the preceding claims, **characterized in that** an axis (80) carrying the grippers (84) is held on stub shafts (68) and (74) and a stub shaft (74) is supported in the drive flange (62) of the rotating body (44).

5. Rotary conveyor (42) according to one or more of the preceding claims, **characterized in that** the grippers (84) are arranged in distances along the longitudinal center axis (88) of the rotary conveyor (42), especially in a manner such that gripper groups each having three grippers (84) are obtained, in which succeeding grippers (84) are offset by 120° respectively.

6. Harvesting machine (10), especially combine having straw walkers (30), comprising a rotary conveyor (42) according to one or more of claims 1 to 5.

7. Harvesting machine (10) according to claim 6, **characterized in that** above each straw walker (30) a group of grippers (84) is located.

8. Harvesting machine (10) according to claim 6 or 7, **characterized by** at least one deflector sheet (8) extending in a small distance from the rotating body (44).

9. Harvesting machine (10) according to claim 8, **characterized in that** the deflector sheet (8) assigned to the rotating body (44) is pivotally supported and that an alarm signal is released when the deflector sheet (8) is lifted off the rotating body (44).

10. A harvesting machine (10) according to claim 6, **characterized in that** within a crop collecting device a rotary conveyor (42) for over- or undershot feeding of harvested crop is mounted.

## Revendications

1. Convoyeur rotatif (42) comprenant un corps rotatif (44) et au moins un poussoir (84), sachant que le corps rotatif (44) est muni d'une paroi latérale sensiblement fermée et le poussoir (84) est logé de manière rotative à l'intérieur du corps rotatif (44) et de manière excentrée par rapport à l'axe de rotation de celui-ci et s'étend de manière mobile dans le sens radial à travers un guidage (50), qui est décalé dans le sens radial vers l'intérieur par. rapport au pourtour extérieur de la paroi latérale du corps rotatif (44), **caractérisé en ce que** la paroi latérale du corps rotatif (44) comporte une zone (46) décalée radialement vers l'intérieur, sur laquelle est disposé le guidage pour poussoir (50).

2. Convoyeur rotatif (42) selon la revendication 1, **caractérisé en ce que**, dans la position radialement vers l'intérieur du poussoir (84), l'extrémité libre du poussoir (84) vient en appui en dessous de la face extérieure de la paroi latérale de la zone non décalée radialement du corps rotatif (44).

3. Convoyeur rotatif (42) selon la revendication 1 ou 2, **caractérisé en ce qu'**au moins un revêtement métallique (48) forme la paroi du corps rotatif (44) et est cintrée de telle sorte que dans la paroi périphérique se forment des zones (46) radialement décalées vers l'intérieur, contre lesquelles viennent en appui les arêtes d'extrémité du revêtement métallique (48).

4. Convoyeur rotatif (42) selon une ou plusieurs des revendications précédentes, **caractérisé en ce qu'**un arbre (80) portant les poussoirs (84) est maintenu sur des bouts d'arbre (68) et (74) et un bout d'arbre (74) est logé dans la flasque d'entraînement (62) du corps rotatif (44) .

5. Convoyeur rotatif (42) selon une ou plusieurs des revendications précédentes, **caractérisé en ce que** les poussoirs (84) sont disposés à distance donnée le long de l'axe médian longitudinal (88) du convoyeur rotatif (42), en particulier de telle sorte qu'il se forme des groupes de poussoirs contenant chacun trois poussoirs (84), dans lesquels les poussoirs (84) consécutifs sont décalés de 120° l'un par rapport à l'autre.

6. Moissonneuse (10), en particulier moissonneuse-batteuse avec des secoueurs (30), comprenant un convoyeur rotatif (42) selon une ou plusieurs des revendications 1 à 5.

7. Moissonneuse (10) selon la revendication 6, **caractérisée en ce qu'**un groupe de poussoirs (84) est disposé au-dessus de chaque secoueur (30).

8. Moissonneuse (10) selon la revendication 6 ou 7, **caractérisée par** au moins un déflecteur (8), qui s'étend à faible distance du corps rotatif (44).

9. Moissonneuse (10) selon la revendication 8, **caractérisée en ce que** le déflecteur (8) associé au corps rotatif est logé de manière pivotante et un signal d'alarme est déclenché chaque fois que ledit déflecteur se détache du corps rotatif (44).

10. Moissonneuse (10) selon la revendication 6, **caractérisée en ce qu'**à l'intérieur d'un dispositif de dégagement des récoltes est disposé un convoyeur rotatif (42), destiné au transport de la récolte avec entraînement par le dessus ou le dessous.
